Europäisches Patentamt

European Patent Office

Office européen des brevets

(11) Veröffentlichungsnummer: **0 486 716 A1**

## EUROPÄISCHE PATENTANMELDUNG

(21) Anmeldenummer: **90122140.8**

(22) Anmeldetag: **20.11.90**

(51) Int. Cl.5: **E04D 3/35**, E04C 2/26

(43) Veröffentlichungstag der Anmeldung:
**27.05.92 Patentblatt 92/22**

(84) Benannte Vertragsstaaten:
**AT BE CH DE DK ES FR GB GR IT LI LU NL SE**

(71) Anmelder: **Unidek Bouwelementen b.v.
Industrieweg 66
NL-5420 AC Gemert(NL)**

(72) Erfinder: **van Dijk, Hendrikus Johannes Maria
Doonheide 18
NL-5421 ZP Gemert(NL)**

(74) Vertreter: **Masch, Karl Gerhard et al
Patentanwälte Andrejewski, Honke & Partner
Theaterplatz 3 Postfach 10 02 54
W-4300 Essen 1(DE)**

(54) **Plattenelement für die Herstellung von Gebäudedächern.**

(57) Ein Plattenelement für die Herstellung von Gebäudedächern besteht aus einer Hartschaumkunststoffplatte (1) insbesondere aus Polystyrol. Auf diese Hartschaumkunststoffplatte (1) ist auf zumindest einer Seite eine Deckplatte (2 bzw. 3) aufgeklebt, die aus einer mit Bindemitteln verfestigten Glasfaser-Preßplatte besteht. Vorzugsweise ist diese Glasfaser-Preßplatte aus Glaswolleabfällen hergestellt. Ein solches Plattenelement zeichnet sich durch extreme Feuchtigkeitsunempfindlichkeit aus.

Fig. 2

Die Erfindung betrifft hauptsächlich ein Plattenelement für die Herstellung von Gebäudedächern, bestehend aus einer Hartschaumkunststoffplatte insbesondere aus Polystyrol, auf welche auf zumindest einer Seite eine Deckplatte aufgeklebt ist.

Bei bekannten Plattenelementen der genannten Art (EP-A-0 347 564) besteht die Deckplatte in der Praxis regelmäßig aus einer Holzspanplatte. Trotz geeigneter Maßnahmen, wie Kaschieren mit lackierter Folie als Dampfsperre, läßt sich bei solchen Spanplatten eine Feuchtigkeitsaufnahme nicht verhindern, die ein Quellen des Plattenelements und damit das Entstehen von Spannungen und Biegungen bewirkt.

In der Praxis sind auch Glasfaser-Preßplatten bekannt, und zwar in Form von Formteilen z.B. für Automobile und dergleichen. Solche Glasfaser-Preßplatten zeichnen sich durch eine praktisch verschwindende Feuchtigkeitsaufnahme aus. Das hat jedoch die Probleme um die Plattenelemente der eingangs genannten Art bisher nicht beeinflußt.

Der Erfindung liegt die Aufgabe zugrunde, ein Plattenelement der eingangs genannten Art so weiter zu entwickeln, daß es gegenüber Feuchtigkeit wesentlich unempfindlicher ist.

Die erfindungsgemäße Lösung dieser Aufgabe besteht darin, daß die Deckplatte aus einer mit Bindemitteln verfestigten Glasfaser-Preßplatte besteht.

Der durch die Erfindung erreichte Vorteil besteht zunächst darin, daß die mit Bindemitteln verfestigte Glasfaser-Preßplatte praktisch kein Feuchtigkeitsaufnahmevermögen besitzt und das Plattenelement daher in feuchter Atmosphäre nicht mehr Quellungen und Spannungen unterworfen ist. Hinzu kommt, daß eine mit Bindemitteln verfestigte Glasfaser-Preßplatte regelmäßig eine höhere Festigkeit als eine Holzspannplatte aufweist, so daß die Deckplatte, die bei den in Rede stehenden Plattenelementen gleichsam tragendes Element ist, erheblich dünner ausgeführt werden kann.

Für die weitere Ausgestaltung bestehen im Rahmen der Erfindung mehrere Möglichkeiten. So ist nach bevorzugter Ausführungsform vorgesehen, daß die Glasfaser-Preßplatte aus Glaswolleabfällen hergestellt ist; insoweit lassen sich die erfindungsgemäßen Plattenelemente auch besonders billig herstellen. Besonders bewährt hat sich in diesem Zusammenhang eine Ausführungsform, bei der die Glasfaser-Preßplatte aus einer zwischen zwei Deckschichten aus Glasfaserstaub angeordneten Glasfaserkernschicht aufgebaut ist. Hier eröffnet sich zusätzlich die Möglichkeit zur Verwertung weiterer Abfälle, indem der Glasfaserkernschicht bis zu 40 Vol.% aufgemahlene Abfälle von Steinwolle, Kunststoffen und/oder Holz beigemischt sind.

Zweckmäßigerweise ist die Glasfaser-Preßplatte mit Phenol/Formaldehydharzen, Polyurethanklebern und/oder Isocyanatklebern als Bindemittel verfestigt. Für den vorgenannten Einsatzzweck, nämlich als Plattenelement für die Herstellung von Gebäudedächern weist die Glasfaser-Preßplatte vorteilhafterweise eine Dicke von 3 bis 30 mm, insbesondere bis 10 mm auf. Zudem sollte sie ein spezifisches Gewicht im Bereich zwischen 0,5 und 1,5 g/cm$^3$ aufweisen. Ohne weiteres ist wie bisher die Möglichkeit gegeben, daß die Glasfaser-Preßplatte ein- und beidseitig mit Papierfolie kaschiert ist.

Bekannte Glasfaser-Preßplatten sind bisher nur statisch als Formteile hergestellt worden. Eine solche statische Herstellung ist im Zuge der Herstellung von Plattenelementen der genannten Art praktisch nicht brauchbar. Insofern ist ein Verfahren zum Herstellen der Glasfaser-Preßplatte für das genannte Plattenelement gekennzeichnet durch eine kontinuierliche Herstellung auf einer Kalanderanlage. Dabei muß natürlich sichergestellt sein, daß der Prozeßdruck nicht zu hoch ist, weil sonst die Glasfasern vermahlen werden.

Im folgenden wird die Erfindung anhand einer ein Ausführungsbeispiel darstellenden Zeichnung näher erläutert. Es zeigen

Fig. 1     einen Querschnitt durch ein Plattenelement und

Fig. 2     in vergrößerter Darstellung den Ausschnitt A aus Fig. 1.

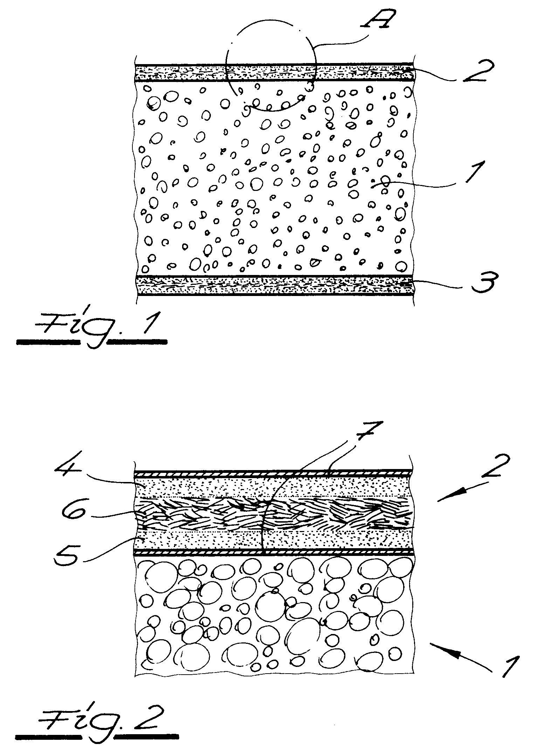

Das in den Figuren dargestellte Plattenelement dient für die Herstellung von Gebäudedächern. In seinem grundsätzlichen Aufbau besteht es aus einer Hartschaumkunststoffplatte 1 aus Polystyrol, auf die oben und unten jeweils eine Deckplatte 2 bzw. 3 aufgeklebt ist. Diese Deckplatte 2 bzw. 3 besteht aus einer mit Bindemitteln verfestigten Glasfaser-Preßplatte.

Die Glasfaser-Preßplatte ist aus Glaswolleabfällen hergestellt und aus einer zwischen zwei Deckschichten 4, 5 aus Glasfaserstaub angeordneten Glasfaserkernschicht 6 aufgebaut. Der Glasfaserkernschicht 6 können bis zu 40 Vol.% aufgemahlene Abfälle von Steinwolle, Kunststoffen und/oder Holz beigemischt sein, was im einzelnen natürlich nicht dargestellt ist. Die Verfestigung der Einzelbestandteile erfolgt zweckmäßigerweise mit Phenol/Formaldehydharzen, die im Zuge des Pressens und der Anwendung von Wärme verfestigen.

Die Glasfaser-Preßplatten weisen eine Dicke von jeweils 5 mm auf, während die Hartschaumkunststoffplatte 1 aus Polystyrol etwa 5 cm dick ist. Die Glasfaser-Preßplatte weist ein spezifisches Gewicht von etwa 1,0 g/cm$^3$ auf. Außerdem wie bei Deckplatten von Plattenelementen üblich ein- oder beidseitig mit Papierfolie 7 kaschiert. Dieses Kaschieren kann im Zuge der kontinuierlichen Herstellung der Glasfaser-Preßplatte auf einer Kalanderanlage durchgeführt werden.

**Patentansprüche**

1. Plattenelement für die Herstellung von Gebäudedächern, bestehend aus einer Hartschaumkunststoffplatte insbesondere aus Polystyrol, auf welche auf zumindest einer Seite eine Deckplatte aufgeklebt ist, **dadurch gekennzeichnet**, daß die Deckplatte (2 bzw.3) aus einer mit Bindemitteln verfestigten Glasfaser-Preßplatte besteht.

2. Plattenelement nach Anspruch 1, dadurch gekennzeichnet, daß die Glasfaser-Preßplatte aus Glaswolleabfällen hergestellt ist.

3. Plattenelement nach Anspruch 1 oder 2, dadurch gekennzeichnet, daß die Glasfaser-Preßplatte aus einer zwischen zwei Deckschichten (4, 5) aus Glasfaserstaub angeordneten Glasfaserkernschicht (6) aufgebaut ist.

4. Plattenelement nach Anspruch 3, dadurch gekennzeichnet, daß der Glasfaserkernschicht (6) bis zu 40 Vol.% aufgemahlene Abfälle von Steinwolle, Kunststoffen und/oder Holz beigemischt sind.

5. Plattenelement nach einem der Ansprüche 1 bis 4, dadurch gekennzeichnet, daß die Glasfaser-Preßplatte mit Phenol/Formaldehydharzen, Polyurethanklebern und/oder Isocyanatklebern als Bindemittel verfestigt ist.

6. Plattenelement nach einem der Ansprüche 1 bis 5, dadurch gekennzeichnet, daß die Glasfaser-Preßplatte eine Dicke von 3 bis 30 mm aufweist.

7. Plattenelement nach Anspruch 6, dadurch gekennzeichnet, daß die Dicke der Glasfaser-Preßplatte bis zu 10 mm ausmacht.

8. Plattenelement nach einem der Ansprüche 1 bis 7, dadurch gekennzeichnet, daß die Glasfaser-Preßplatte ein spezifisches Gewicht zwischen 0,5 und 1,5 $g/cm^3$ aufweist.

9. Plattenelement nach einem der Ansprüche 1 bis 8, dadurch gekennzeichnet, daß die Glasfaser-Preßplatte ein- oder beidseitig mit Papierfolie (7) kaschiert ist.

10. Verfahren zum Herstellen einer Glasfaser-Preßplatte für das Plattenelement nach einem der Ansprüche 1 bis 9, **gekennzeichnet durch** eine kontinuierliche Herstellung auf einer Kalanderanlage.

_Fig. 1_

_Fig. 2_

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X<br>Y | US-A-4 073 997 (RICHARDS)<br>* Spalte 3, Zeile 38 – Spalte 6, Zeile 63; Abbildungen 1-4 * | 1,5-8,10<br>2,3,9 | E04D3/35<br>E04C2/26 |
| Y | US-A-4 462 815 (PROPSTER)<br>* Spalte 1, Zeile 11 – Spalte 1, Zeile 27 * | 2 | |
| Y | US-A-3 853 683 (STAPLEFORD)<br>* Spalte 2, Zeile 43 – Spalte 4, Zeile 20 *<br>* Spalte 6, Zeile 57 – Spalte 7, Zeile 12; Abbildungen 1-6 * | 3 | |
| Y | US-A-3 955 031 (JONES)<br>* Spalte 2, Zeile 29 – Spalte 2, Zeile 45; Abbildungen 1-3 * | 9 | |
| A | WO-A-8 303 796 (HEXCEL CORPORATION)<br>* Seite 3, Zeile 36 – Seite 4, Zeile 35; Ansprüche 1,3,4,5,9; Abbildung 1 * | 3,4 | |
| A | US-A-4 308 308 (SACHSE)<br>* Anspruch 3 * | 4 | RECHERCHIERTE SACHGEBIETE (Int. Cl.5 )<br><br>E04D<br>E04C |

Der vorliegende Recherchenbericht wurde für alle Patentansprüche erstellt

| Recherchenort | Abschlußdatum der Recherche | Prüfer |
|---|---|---|
| DEN HAAG | 09 JULI 1991 | Hendrickx X. |